# EUROPEAN PATENT SPECIFICATION

(11) **EP 3 240 223 B1**
(45) Date of publication and mention of the grant of the patent: **07.07.2021**
(21) Application number: 15871871.8
(22) Date of filing: 14.12.2015
(51) Int. Cl.: H04L 5/00, H04L 27/00

(54) **METHOD AND DEVICE FOR RESOURCE MANAGEMENT IN AN UNLICENSED CARRIER**
VERFAHREN UND VORRICHTUNG ZUR RESSOURCENVERWALTUNG IN EINEM NICHTLIZENZIERTEN TRÄGER
PROCÉDÉ ET DISPOSITIF DE GESTION D'UNE RESSOURCE DANS UNE PORTEUSE SANS LICENCE

(30) Priority: 22.12.2014 CN 201410811990
(43) Date of publication of application: 01.11.2017
(73) Proprietor: ZTE Corporation, Shenzhen, Guangdong 518057 (CN)
(72) Inventor: GOU, Wei, Shenzhen Guangdong 518057 (CN); BI, Feng, Shenzhen Guangdong 518057 (CN); ZHAO, Yajun, Shenzhen Guangdong 518057 (CN); PENG, Focai, Shenzhen Guangdong 518057 (CN)
(74) Representative: Wallinger Ricker Schlotter Tostmann
(86) International application number: PCT/CN2015/097292
(87) International publication number: WO 2016/101802

(56) References cited:
- WO-A1-2012/139278
- WO-A1-2014/148818
- CN-A- 102 232 307
- BROADCOM CORPORATION ET AL: "Robust Coexistence LAA-LTE", 3GPP DRAFT; R1-145167_ROBUSTCOEXISTENCELAA -FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050876190, Retrieved from the Internet: URL:http://www.3gpp.org/ftp/Meetings_3GPP_ SYNC/RAN1/Docs/ [retrieved on 2014-11-17]
- ZTE: "Potential solutions to obtain unlicensed spectrum", 3GPP DRAFT; R1-144826 POTENTIAL SOLUTIONS TO OBTAIN UNLICENSED SPECTRUM_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. San Francisco, USA; 20141117 - 20141121 17 November 2014 (2014-11-17), XP050875892, Retrieved from the Internet: URL:http://www.3gpp.org/ftp/Meetings_3GPP_ SYNC/RAN1/Docs/ [retrieved on 2014-11-17]
- HUAWEI ET AL: "Further analysis on the required functionalities for LAA", 3GPP DRAFT; R1-144590, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050875680, Retrieved from the Internet: URL:http://www.3gpp.org/ftp/Meetings_3GPP_ SYNC/RAN1/Docs/ [retrieved on 2014-11-17]

## Description

### Technical Field

The present application relates to, but is not limited to, the field of communication.

### Background

In the evolution process of Long Term Evolution (LTE), the project of LTE Rel-13 version began to be initiated and researched in September 2014, herein one important project in the Rel-13 is that the LTE system uses unlicensed carriers to operate. This technology will enable the LTE systems to use the existing unlicensed carriers, and greatly enhance potential spectrum resources of the LTE systems, such that the LTE systems can obtain lower spectrum costs.

In addition, unlicensed spectrums also have many advantages:
1. Free/low expense (the unlicensed spectrums do not need to be purchased and the cost of the spectrum resources is zero).
2. Low admission requirement and low cost (both individuals and enterprises may participate in deployment and devices of device providers may be randomly selected).
3. Resource sharing (when a plurality of different systems operate or different operators of the same system operate, some resource sharing ways may be considered to improve spectrum efficiency).
4. Numerous wireless access technologies (collaboration across different communication standards is difficult and network topologies are various).
5. Numerous wireless access stations (the number of users is large, and collaboration is difficult and centralized management overhead is huge).
6. Numerous applications (from the view of data, multiple services such as Machine to Machine (M2) and Vehicle to Vehicle (V2V) are mentioned to be capable of operating therein).

However, the use of the unlicensed carriers by the LTE systems is faced with many problems, part of which are as follows.

For unlicensed spectrums, multiple systems, such as WIFI systems, will operate on the same spectrum. To ensure that each system uses the unlicensed spectrums fairly, it is possible that the LTE systems occupy the unlicensed spectrums discontinuously in time. Therefore, to realize data transmission when the LTE systems are deployed on the unlicensed spectrums, how to determine Hybrid Auto Repeat Request (HARQ) retransmission, ACK/NACK feedback or Channel State Information (CSI) feedback or Physical Hybrid ARQ Indicator Channel (PHICH) transmission and the like corresponding to carriers on the unlicensed spectrums and to implement data transmission is a problem required to be solved urgently.

The document, BROADCOM CORPORATION ET AL: "Robust Coexistence LAA-LTE", 3GPP DRAFT R1-145167 (2014-11-17) , discusses a robust coexistence solution for LAA with the incumbent technologies in unlicensed bands.

The document, ZTE: "Potential solutions to obtain unlicensed spectrum", 3GPP DRAFT R1-144826 (2014-11-17), discusses some potential solutions to obtain unlicensed spectrum between LAA or between LAA and Wi-Fi.

The document, HUAWEI ET AL: "Further analysis on the required functionalities for LAA" 3GPP DRAFT R1-144590 (2014-11-17), discusses further considerations and analysis based on the functionality of Listen-before Talk (LBT) and discontinuous transmission, focusing on fast LAA Scell on/off with LBT and impact to the procedures of synchronization and measurements, and also other issues such as hidden node problem during utilization of unlicensed spectrum.

### Summary

The invention is defined by the appended claims.

The following is a summary of the subject matter described in detail in this document.

This document provides a method and device for managing a resource in an unlicensed carrier to effectively utilize the transmission resource for data transmission.

A method for managing a resource in an unlicensed carrier is defined by independent claim 1.

In an example, the method further includes:
the station configuring the first type of resource before the second type of resource in a time order.

In an example, the station transmitting and/or receiving data by using the occupied resource according to the use policy includes:
after the station completes transmission by using the first type of resource, if the station still needs to transmit data, the station then using the second type of resource for transmission; and if the station does not need to transmit data any more, the station not using the second type of resource.

In an example, the station acquiring the right to use the unlicensed carrier includes: the station acquiring the right to use the unlicensed carrier by performing a clear channel assessment (CCA) detection.

In an example, the station transmitting and/or receiving data by using the occupied resource according to the use policy includes: the station using directly the second type of resource without performing the CCA detection before using the second type of resource; or, a preemption probability of the CCA detection performed by the station before using the second type of resource being higher than a preemption probability of a CCA detection performed by the station when preemping a first type of resource.

In an example, a preemption probability of the CCA detection performed by the station before using the second type of resource being higher than a preemption probability of a CCA detection performed by the station when preempting a first type of resource includes:
a time length for which the station executes a CCA detection process when the station acquires the second type of resource being shorter than a time length for which the station executes a CCA detection process when the station preempts the first type of resource.

In an example, the method further includes: when the station uses directly the second type of resource without performing the CCA detection before using the second type of resource, a receiving end of the station and/or a station transmitting data to the station also using directly the second type of resource without performing the CCA detection before using the second type of resource, herein a station other than the station that acquires the right to use the unlicensed carrier, the receiving end of the station, and a station transmitting data to the station first performs the CCA detection at the second type of resource, and is allowed to use the second type of resource only when the unlicensed carrier is idle.

In an example, relative positions of the first type of resource and the second type of resource are preconfigured or configured by the station.

In an example, the second type of resource and the first type of resource are discontinuous in time.

In an example, an interval between the second type of resource and the first type of resource is one or more of the following: 1 ms, 1.5 ms, 2 ms, 2.5 ms, 3 ms, 4 ms, 5 ms, 6 ms, 7 ms, 8 ms and 16 ms, herein the interval is a length of time between an end of the last subframe of the first type of resource and a start of the first subframe of the second type of resource.

In an example, a measurement unit of the second type of resource is 1 ms, or one subframe, or 0.5 ms, or is composed of 1 to 7 orthogonal frequency division multiplexing (OFDM) symbols for a standard cyclic prefix, or is composed of 1 to 6 OFDM symbols for a long cyclic prefix.

In an example, the second type of resource is discontinuous resources, herein measurement units of the discontinuous resources are the same or different.

In an example, the station transmitting and/or receiving data by using the occupied resource according to the use policy includes: the station transmitting, by using the second type of resource, one or more of the following: physical hybrid auto repeat request indicator channel (PHICH) data, licensed information and a reference signal; or the station receiving, in the second type of resource, one or more of the following: a non-acknowledgment/acknowledgment (NACK/ACK) message and licensed information, which are transmitted by an appointed station; or the station receiving data transmitted by a receiving end designated by the station in the second type of resource; or the station simultaneously transmitting and receiving data in the second type of resource in a time division multiplexing mode when using the second type of resource.

In an example, the station transmitting and/or receiving data by using the occupied resource according to the use policy includes: the station transmitting information or data or signals to multiple destinations by using the second type of resource.

In an example, when the second type of resource includes a plurality of measurement units, uplink and downlink are supported in the different measurement units; when only one measurement unit is included, the second type of resource in a time division multiplexing mode includes a downlink resource and an uplink resource.

In an example, the second type of resource further includes a guard interval for separating an uplink resource from a downlink resource.

In an example, the station transmitting and/or receiving data by using the occupied resource according to the use policy includes:
the station transmitting data by using the second type of resource, and receiving data by using the second type of resource after completion of data transmission.

In an example, the station transmitting data by using the second type of resource and receiving data by using the second type of resource after completion of data transmission includes: the station transmitting a signal in a front part of the second type of resource, and then receiving information transmitted by an appointed receiving end in a subsequent resource, herein the front part of the second type of resource and the subsequent resource are obtained by dividing according to the OFDM symbols in the second type of resource.

In an example, the front part of the second type of resource occupies first one to three or four OFDM symbols, and the subsequent resource occupies remaining OFDM symbols, or there is an interval between the subsequent resource and the front resource.

A station for managing a resource in an unlicensed carrier is further defined in independent claim 13.

A computer readable storage medium having computer-executable instructions stored therein is further defined in independent claim 14.

In embodiments provided by the present invention, after the right to use the unlicensed carrier are acquired, the use policy of the unlicensed carrier is configured to facilitate future transmission of the information by using the resource, to achieve the object of transmitting the data by using the transmission resource effectively.

Other aspects will be clear after the drawings and detailed description are read and understood.

### Brief Description of the Drawings

FIG. 1 is a flow chart of a method for managing a resource in an unlicensed carrier in accordance with an embodiment of the present invention.
FIG. 2 is a schematic diagram one of a resource in an unlicensed carrier occupied by a station in accordance with an embodiment of the present invention.
FIG. 3 is a schematic diagram two of a resource in an unlicensed carrier occupied by a station in accordance with an embodiment of the present invention.
FIG. 4 is a schematic diagram three of a resource in an unlicensed carrier occupied by a station in accordance with an embodiment of the present invention.
FIG. 5 is a schematic diagram four of a resource in an unlicensed carrier occupied by a station in accordance with an embodiment of the present invention.
FIG. 6 is a structural block diagram of a device for managing a resource in an unlicensed carrier in accordance with an embodiment of the present invention.

### Detailed Description

The present invention will be described in detail below in combination with accompanying drawings. It should be illustrated that, under the situation of no conflict, the embodiments and the features in the embodiments in the present application can be freely combined. The invention is defined by the appended claims.

In an embodiment of the present invention, a station 1 preempts a right to use an unlicensed carrier, determines a resource occupied by the unlicensed carrier. Herein, the occupied resource is divided into two types, and the first type is a resource used by the station 1, and the second type is a resource used by the station 1 preferentially. The station 1 can use the second type of resource preferentially to transmit and/or receive data by after the use of the first type of resource is completed.

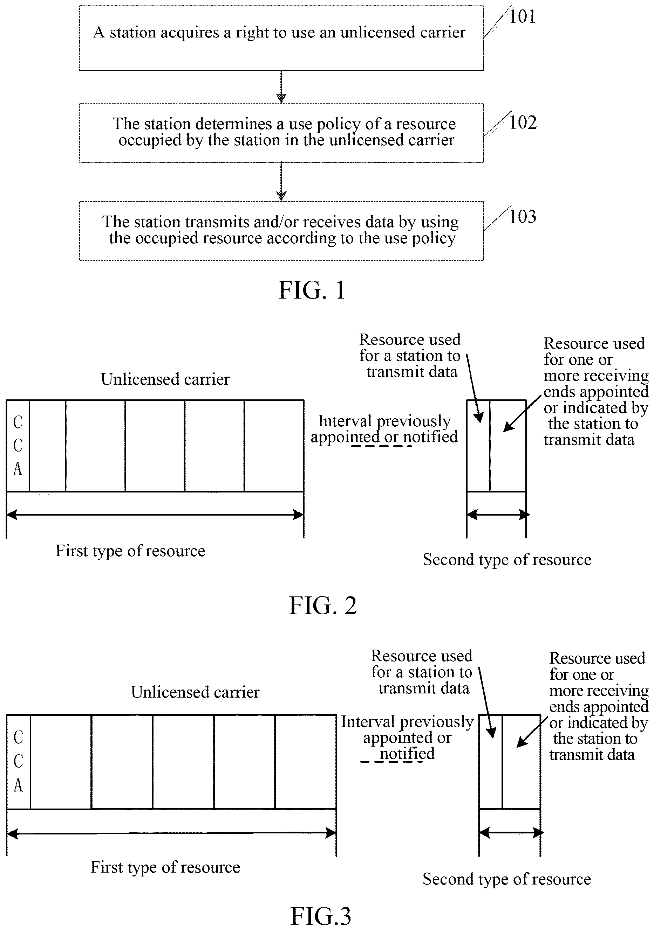

FIG. 1 is a flow chart of a method for managing a resource in an unlicensed carrier in accordance with an embodiment of the present invention. The method shown in FIG. 1 includes the following steps 101-103.

In step 101, a station acquires a right to use the unlicensed carrier.

In step 102, the station determines a use policy of a resource occupied by the station in the unlicensed carrier.

In step 103, the station transmits and/or receives data by using the occupied resource according to the use policy.

In the embodiment provided by the present invention, after the right to use the unlicensed carrier is acquired, the use policy of the unlicensed carrier is configured to facilitate future transmission of information by using the resource, to achieve the object of transmitting the data by using the transmission resource effectively.

In the embodiment of the invention, after the resource in the unlicensed carrier is occupied, not only part of the resource of the carrier is directly used, but also information of a part of the resource is configured to be preferentially used to facilitate future transmission of the information by using the resource, to achieve the object of transmitting the data by using the transmission resources effectively, thereby solving and mitigating the problem that part of control related data cannot be transmitted in time because of the limited time length of the occupied unlicensed carrier in the unlicensed carrier, further improving the transmission efficiency in the unlicensed carrier.

FIG. 2 is a schematic diagram one of a resource in an unlicensed carrier occupied by a station in accordance with an embodiment of the present invention. In the schematic diagram shown in FIG. 2, after the station 1 occupies the first type of resource, the station 1 notifies its subordinate user equipment (UE) of the occupancy situation, or notifies its subordinate receiving end of occupancy time length information.

Of course, the occupancy time length information may be also not required to be notified. Referring to FIG. 3, FIG. 3 is a schematic diagram two of a resource in an unlicensed carrier occupied by a station in accordance with an embodiment of the present invention. In the schematic diagram shown in FIG. 3, the time length for which the unlicensed carrier is occupied each time through standard protocol consolidation is fixed, for example, the unlicensed carrier is occupied based on a fixed frame structure. Thus, other stations can know the time length for which the first type of resource is occupied according to the protocol.

The station configures the first type of resource before the second type of resource in a time order.

After the station completes transmission by using the first type of resource, if the station still needs to transmit the data, the station then uses the second type of resource for transmission; and if the station does not need to transmit the data any more, the station does not use the second type of resource.

When the station 1 does not use the second type of resource to transmit or does not receive data transmitted by other stations in the second type of resource, the station 1 does not transmit the data when the second type of resource arrives, or the station 1 notifies other stations not to use the second type of resource to transmit data. The process is as follows: The station 1 determines whether the unlicensed carrier is idle through clear channel assessment (CCA, the embodiments of the present invention may also include extended CCA (eCCA), the same below). When the unlicensed carrier is idle, the station 1 occupies the unlicensed carrier and determines the first type of resource and the second type of resource that the station 1 occupies. The first type of resource is the usage time of the unlicensed carrier (which can be measured in a subframe as a Unit) that the station 1 occupies continuously after the end of the CCA. For example, the station 1 occupies 4 subframes (which may include subframes where the CCA is located, or may not include the subframes where the CCA is located, but should be appointed previously. One subframe of the LTE is 1 ms). The second type of resource is discontinuous with the first type of resource in time (in case of being continuous, the resource may be considered to belong to the first type of resource), where the interval between the first type of resource and the second type of resource (the interval is calculated with the last subframe n of the first type of resource) is suggested to be one or more of 1ms (Or n+2), 2ms (or n+3), 3ms (or n+4), 4ms (or n+5), 5ms (or n+6), 6ms (or n+7) (7 ms (or n+8), 8 ms (or n+9), 16 ms (or n+17), 1.5 ms and 2.5 ms. The interval information may be consolidated by standard protocols and different intervals may be consolidated according to the different uses of the second type of resource, thus cutting off signaling notifying neighboring stations and receiving ends. If the standard protocol consolidation is not used, the interval information needs to be notified and may be transmitted via information of broadcast type. The interval information may also be transmitted with the occupancy time length information at the same time (if required).

The CCA is used to evaluate whether the carrier/channel is idle. The evaluation is realized in many manners, for example, a common one of them is that a signal with a fixed time length from the unlicensed carrier is received and then whether energy of the signal exceeds a threshold is detected; if the threshold is exceeded, then the carrier is busy and not available, otherwise the carrier is empty and available. The extended CCA may also be included, and its purpose is to determine whether the carrier is idle through multiple energy detections, and if all of the multiple energy detections are idle, the carrier is available, otherwise, the carrier is not available. The CCA also has the effect of avoiding multiple stations competing for the unlicensed carrier at the same time. For example, the numbers of CCAs performed by different stations are different.

The second type of resource may also be the resource in the following manner: the second type of resource is a number of discontinuous subframes, for example, when the second type of resource is 3 subframes, the interval between the second type of resource and the last subframe of the first type of resource may be 4 ms, 8ms and 16ms.

A measurement unit of the second type of resource is 1 ms, or one subframe, or 0.5 ms, or is composed of 1 to 7 orthogonal frequency division multiplexing (OFDM) symbols for a standard cyclic prefix, or is composed of 1 to 6 OFDM symbols for a long cyclic prefix. The second type of resource is composed of a number of measurement units of discontinuous resources.

The second type of resource may be used for the following purposes or uses: transmitting NACK/ACK by the receiving end, retransmitting data or signals by the station 1, transmitting PHICH data by the station 1, transmitting uplink/downlink licensed information by the station 1, transmitting the licensed information by the receiving end, and transmitting a reference signal. Information or data or signals to multiple destinations may be simultaneously transmitted in the second type of resource. If the second type of resource supports both uplink and downlink, the subframes (or slots (resource with the time length of 0.5 ms) of the second type of resource can include a downlink resource and an uplink resource. In an exemplary embodiment, there may be a guard interval between the uplink resource and downlink resource. Or the uplink resource and downlink resource are in different subframes of the second type of resource for transmission. When the second type of resource supports both uplink and downlink, and includes only one measurement unit, the second type of resource includes the downlink resource, the uplink resource and a guard interval, herein the guard interval is optional.

Several modes of using the second type of resource will be described below:
In mode 1, the station 1 (which may be a base station or UE) obtains the first type of unlicensed carrier resource after preempting the unlicensed carrier resource, and the station 1 also obtains by default preferential a right to use the second type of unlicensed carrier resource. When the second type of resource arrives, the station 1 does not need to execute the CCA process, but transmits data directly in the second type of resource. For example, the station 1 transmits PHICH data and licensed information.

In mode 2, the station 1 (which may be a base station or UE) obtains the first type of unlicensed carrier resource after preempting the unlicensed carrier resource, and the station 1 also obtains by default preferential a right to use the second type of unlicensed carrier resource. When the second type of resource arrives, the station 1 does not need to execute the CCA process, but receives data directly in the second type of resource. For example, the station 1 receives data transmitted by a appointed station in the second type of resource, such as NACK/ACK information transmitted by the receiving end.

In mode 3, the station 1 (which may be a base station or UE) obtains the first type of unlicensed carrier resource after preempting the unlicensed carrier resource, and the station 1 also obtains by default preferential a right to use the second type of unlicensed carrier resource. When the second type of resource arrives, and the receiving end designated by the station 1 transmits data, the station 1 does not need to execute the CCA process, but transmits data directly in the second type of resource.

In mode 4, the station 1 (which may be a base station or UE) obtains the first type of unlicensed carrier resource after preempting the unlicensed carrier resource, and the station 1 also obtains by default preferential a right to use the second type of unlicensed carrier resource. The station 1 does not perform the CCA in the second type of resource but transmits data directly and then receives data. For example, the station 1 first transmits data and then receives data in the second type of resource. For example, the station 1 transmits signals in the front portion of a subframe, and then receives NACK/ACK information transmitted by the receiving end in the remaining resource. The licensed information may also be transmitted in the front portion. Here in accordance with the principle of first transmitting and receiving later, it can be prevented that neighboring stations preempt the second type of resource, for example, since the transmission power of the receiving end is small, it is possible for the neighboring stations to detect that the second type of resource is idle, thus the neighboring stations preempt the second type of resource.

The station simultaneously transmit and receive data in the second type of resource according to a time division multiplexing mode when using the second type of resource.

That the station 1 transmits data directly and then receives data in the second type of resource includes that: the station 1 transmits the signals in the front portion of the second type of resource, and then receives the information, transmitted by the appointed receiving end, in the subsequent resource. The front resource and the subsequent resource are obtained by dividing according to OFDM symbols in the second type of resource. The front resource occupies first 1 to 2 or 3 or 4 OFDM symbols, and the subsequent resource occupies all of the remaining OFDM symbols, or there is an interval between the subsequent resource and the front resource. The interval may be less than or equal to 2 OFDM symbols, for example 20us.

Preemption probability (statistical probability) of the CCA performed by the station before the use of the second type of resource is higher than preemption probability of the CCA performed when the station acquires the first type of resource. Such situation is used on the premise that each station requires to perform the CCA detection in a configuration, to ensure that the station can obtain the second type of resource by configuring the preemption probability of the station higher.

When the second type of resource arrives, in the first manner the station 1 uses the second type of resource directly, and does not need to execute the CCA process. Or in the second manner, the station 1 executes a CCA process when the second type of resource arrives, but the time length for which the CCA detection process is executed is shorter than the time length for which the CCA detection process is executed to preempt the first type of resource. Thus, the station 1 can preempt the second type of resource more preferentially than other stations, such manner can avoid affecting other systems (such as wifi) using the second type of resource. However, if using this manner, inexistence of the second type of resource may be caused. Therefore, different manners may be selected for different actual scenarios.

Of course, to simplify the design, the configuration of the second type of resource, such as information of the interval, quantity, unit time length, etc., of the second type of resource, may be appointed previously. These appointments may be determined to respective configurations according to the different uses of the second type of resource. The optimal configurations of the second type of resource for different uses will be given below. For the case where the uplink data is transmitted by using the second type of resource, the optimal interval may be 1 ms, which has a relatively high requirement on processing speed of hardware of the receiving end. Such design is beneficial for improving efficiency of the unlicensed carrier. In addition, the interval may be 2ms and 3ms, herein the 3ms design may be compatible with design requirements in the LTE. For transmission of downlink data by using the second type of resource, the interval is 4ms, 5ms, 6ms, 7ms, 8ms or 16ms, which is conducive to compatibility with design requirements in the LTE.

When other stations want to use the second type of resource of the station 1, they may perform operations according to the following modes:
In mode 1, other stations need to first execute the CCA process in each subframe of the second type of resource, and if a result of the CCA detection is idle, then the remaining resource in the subframe may be used.

In mode 2, other stations first execute the CCA process in the first subframe of the second type of resource, and if a result of the CCA detection is idle, then the remaining resource in the subframe and other subframes in the second type of resource may be used.

Embodiments will be described below.

### Embodiment one

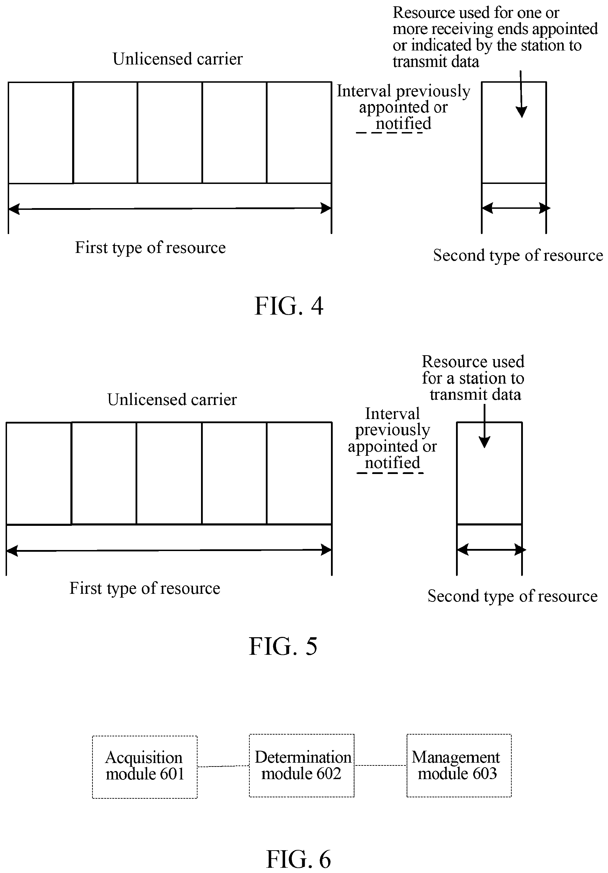

FIG. 4 is a schematic diagram three of an occupied resource in an unlicensed carrier in accordance with an embodiment of the present invention. In the schematic diagram shown in FIG. 4, the distribution situation of the second type of resource determined by the system is as follows: the interval between the second type of resource and the last subframe of the first type of resource is 5 ms (i.e., if the last subframe of the first type of resource is n, then the first subframe of the second type of resource is n+6, and here the interval may be determined according to the minimum hardware processing delay in the system; if the processing delay is relatively large, n+7 or more may be selected, and vice versa), and the second type of resource is composed of 1 subframe.

The station 1 obtains the right to use the unlicensed carrier through the CCA process, determines occupancy time length for which the first type of resource is required to be occupied, and transmits the occupancy time length information to the receiving end. The station 1 also determines the position of the second type of resource based on the above assumption. The station 1 transmits or receives data in the first type of resource, and when the use of the first type of resource is completed, the station 1 knows that there is a portion required be retransmitted in the data transmitted in the first type of resource, then the station 1 may transmit the data required be retransmitted when the second type of resource arrives. The receiving end receives the occupancy time length information transmitted by the station 1 and determines the position of the second type of resource according to the above assumption. When the receiving end feeds back NACK in the data received in the first type of resource, the receiving end may receive retransmission data of the station 1 in the second type of resource. At this point, the retransmission data of any subframe in the first type of resource may be retransmitted in the second type of resource.

Assuming that the first type of resource of the station 1 is 4 subframes, denoted n-3, n-2, n-1 and n, respectively, and the first subframe of the second type of resource is n+6. The station 1 transmits data to a receiving end 1 in the n-1 subframe, and the receiving end 1 fails to receive it correctly, and feeds back NACK (transmitted in the licensed carrier); the station 1 transmits data to a receiving end 2 in the n-2 subframe, and the receiving end 2 fails to receive it correctly, and feeds back NACK (the NACK is also fed back in the licensed carrier, and the feedback is actually on the n+2 subframe according to the principle of the LTE). The station 1 can receive the 2 pieces of feedback information described above before n+6, thus, the station 1 can transmit the retransmission data to the receiving end 1 and the receiving end 2 in the second type of resource n+6.

The receiving end feeding back the NACK in the first type of resource needs to receive the retransmission data of the station 1 in the second type of resource. If there are a lot of data required to be retransmitted and the second type of resource are not enough for retransmission of all the data, the station 1 may select to retransmit part of the data and the other part will not be retransmitted.

When the second type of resource arrives, the station 1 uses the second type of resource directly and does not need to execute the CCA process.

The other stations receive the occupancy time length information transmitted by the station 1, and know the position of the second type of resource according to the appointment. When the second type of resource arrives, if the other stations want to use the second type of resource, the other stations need to execute first the CCA process in the first subframe of the second type of resource, and if a result of the CCA detection is idle, the remaining resource in the subframe and the other subframes in the second type of resource may be used; or if the CCA process is executed first in each subframe of the second type of resource, when a result of the detection is idle, the remaining resource in the corresponding subframe may be used by other stations.

If the other stations do not plan to use the second type of resource, the transmission of the data will be paused when the second type of resource arrives.

### Embodiment two

FIG. 5 is a schematic diagram four of a resource in an unlicensed carrier occupied by a station in accordance with an embodiment of the present invention. In the schematic diagram shown in FIG. 5, the distribution situation of the second type of resource determined by the system is as follows: the interval between the second type of resource and the last subframe of the first type of resource is 4 ms (i.e., if the last subframe of the first type of resource is n, then the first subframe of the second type of resource is n+5, and here the interval may be determined according to the minimum hardware processing delay in the system; if the processing delay is relatively large, n+6 or more may be selected, and vice versa), and the second type of resource is composed of 1 subframe.

The station 1 obtains the right to use the unlicensed carrier through the CCA process, determines occupancy time length for which the first type of resource is required to be occupied, and transmits the occupancy time length information to the receiving end. The station 1 also determines the position of the second type of resource based on the above assumption. After the station 1 schedules the receiving end to transmit uplink data in the first type of resource or subordinate UE of the station 1 knows the first type of resource obtained by the station 1, the UE autonomously schedules and transmit the uplink data to the station 1. The station 1 receives the data transmitted by the UE in the first type of resource and determines whether the data is received correctly to form the corresponding PHICH information. The station 1 transmits the corresponding PHICH information in the second type of resource if the corresponding PHICH information cannot be transmitted in the first type of resource. At this point, the PHICH corresponding to the received data of any subframe in the first type of resource may be transmitted in the second type of resource. The receiving end receives the occupancy time length information transmitted by the station 1, and determines the position of the second type of resource according to the above assumption. When the receiving end transmits the data to the station 1 in the first type of resource and does not receive the PHICH information transmitted by the station 1, the receiving end may receive the PHICH information transmitted by the station 1 in the second type of resource.

Assuming that the first type of resource of the station 1 are 4 subframes, denoted n-3, n-2, n-1 and n, respectively, and the first subframe of the second type of resource is n+5. The station 1 receives the data transmitted by a receiving end 1 in the n-1 subframe and receives it correctly; the station 1 receives the data transmitted by a receiving end 2 in the n-2 subframe and does not receive it correctly. In a case, if according to the scheduling and timing relationship of the LTE in the related art, the station 1 transmits uplink licensed information on the n subframe then a receiving side 3 transmits the uplink data (transmitted in the licensed carrier) on the subframe n+4, and if the station 1 receives the data transmitted by the receiving end 3 on n+4 subframe, then the station 1 will feed back PHICH only on n+8 subframe. Considering this timing relationship, it may be assumed that the second type of resource is on n+8 subframe. However, considering the unlicensed carrier, there is a possibility that the receiving end may autonomously transmit the data, and in the present embodiment, the station 1 needs to be capable of feeding back the PHICH information on n+5 subframe. The PHICH information may include PHICH information of any subframe in the first type of resource.

The receiving end which has not received the PHICH information in the first type of resource needs to receive the PHICH information transmitted by the station 1 in the second type of resource.

When the second type of resource arrives, the station 1 uses the second type of resource directly and does not need to execute the CCA process.

The other stations receive the occupancy time length information transmitted by the station 1, and know the position of the second type of resource according to the appointment. When the second type of resource arrives, if the other stations want to use the second type of resource, the other stations need to execute first the CCA process in the first subframe of the second type of resource, and if a result of the CCA detection is idle, the remaining resource in the subframe and the other subframes in the second type of resource may be used; or if the CCA process is executed first in each subframe of the second type of resource, when a result of the detection is idle, the remaining resource in the corresponding subframe may be used by other stations.

If the other stations do not plan to use the second type of resource, the transmission of the data will be paused when the second type of resource arrives.

### Embodiment three

Assuming that the distribution situation of the second type of resource determined by the system is as follows: the interval between the second type of resource and the last sub frame of the first type of resource is 3 ms (i.e., if the last subframe of the first type of resource is n, then the first subframe of the second type of resource is n+4), and the second type of resource is composed of 1 subframe.

The station 1 obtains the right to use the unlicensed carrier through the CCA process, determines occupancy time length of the first type of resource required to be occupied, and transmits the occupancy time length information to the receiving end. The station 1 also determines the position of the second type of resource based on the above assumption. The station 1 transmits or receives data in the first type of resource, and if the station 1 knows that the NACK/ACK corresponding to the data transmitted in the first type of resource is not received (transmitted by the receiving end) when the use of the first type of resource by the station 1 is completed, then the station 1 may receive the NACK/ACK information in the second type of resource when the second type of resource arrives. Of course, the receiving end needs to receive the occupancy time length information transmitted by the station 1, and determine the position of the second type of resource based on the above assumption. If the receiving end has not transmitted the NACK/ACK in the first type of resource when the use of the first type of resource is completed, the receiving end may transmit the NACK/ACK in the second type of resource. At this point the receiving end can transmitting the NACK/ACK corresponding to any subframe in the first type of resource for retransmission in the second type of resource.

Assuming that the first type of resource of the station 1 is 4 subframes, denoted n-3, n-2, n-1 and n, respectively, and the first subframe of the second type of resource is n+4. The station 1 transmits the data to a receiving end 1 in the n-1 subframe, and the receiving end 1 does not receive it correctly; the station 1 transmits the data to a receiving end 2 in the n-2 subframe, and the receiving end 2 receives it correctly. According to NACK/ACK feedback timing of the LTE, neither the receiving end 1 nor the receiving end 2 can transmit NACK/ACK when the use of the first type of resource is completed, then the receiving end 1 and the receiving end 2 transmit the NACK/ACK in the second type of resource.

When the second type of resource arrives, the receiving end 1 and the receiving end 2 use the second type of resource directly and do not need to execute the CCA process.

The other stations receive the occupancy time length information transmitted by the station 1 and know the position of the second type of resource according to the appointment. When the second type of resource arrives, if the other stations want to use the second type of resource, the other stations need to execute first the CCA process in the first subframe of the second type of resource, and if the result of the CCA detection is idle, the remaining resource in the subframe and the other subframes in the second type of resource may be used; or if the CCA process is executed first in each subframe of the second type of resource, when a result of the detection is idle, the remaining resource in the corresponding subframe may be used by other stations.

If the other stations do not plan to use the second type of resource, the transmission of the data will be paused when the second type of resource arrives.

In the present embodiment, the second type of resource is selected to be n+4 subframe, to be compatible with timing of the LTE system. However, for the unlicensed carrier, control regulations exist in some regions or countries. To comply with the regulations, the second type of resource may be designed at n+2 or n+3, which is easier to meet requirements of the control regulations, but the requirements for processing speed of hardware are higher. Therefore, in the present embodiment, the second type of resource may be selected to be n+2 or n+3 according to the actual regions/countries.

### Embodiment four

Since the transmission power of the receiving end is generally small, it is difficult to be detected by the neighboring stations when data is transmitted, thus the neighboring stations conclude that the unlicensed carrier is idle and then preempt the unlicensed carrier to use. An embodiment is provided below, in which the base station helps the receiving end to stabilize the right to use the second type of resource. See FIG. 2.

Assuming that the distribution situation of the second type of resource determined by the system is as follows: the interval between the second type of resource and the last subframe of the first type of resource is 3 ms (i.e., if the last subframe of the first type of resource is n, then the first subframe of the second type of resource is n+4), and the second type of resource is composed of 1 subframe.

The station 1 obtains the right to use the unlicensed carrier through the CCA process, determines occupancy time length for which the first type of resource is required to be occupied, and transmits the occupancy time length information to the receiving end. The station 1 also determines the position of the second type of resource based on the above assumption. The station 1 transmits or receives data in the first type of resource, and if the station 1 knows that NACK/ACK corresponding to the data transmitted in the first type of resource is not received (transmitted by the receiving end) when the use of the first type of resource by the station 1 is completed, then the station 1 may receive the NACK/ACK information in the second type of resource when the second type of resource arrives. Of course, the receiving end needs to receive the occupancy time length information transmitted by the station 1, and determine the position of the second type of resource based on the above assumption. If the receiving end has not transmitted the NACK/ACK in the first type of resource when the use of the first type of resource is completed, the receiving end may transmit the NACK/ACK in the second type of resource. At this point the receiving end can transmit the NACK/ACK corresponding to any subframe in the first type of resource for retransmission in the second type of resource.

Assuming that the first type of resource of the station 1 is 4 subframes, denoted n-3, n-2, n-1 and n, respectively, and the first subframe of the second type of resource is n+4. The station 1 transmits the data to a receiving end 1 in the n-1 subframe, and the receiving end 1 does not receive it correctly; the station 1 transmits the data to a receiving end 2 in the n-2 subframe, and the receiving end 2 receives it correctly. According to NACK/ACK feedback timing of the LTE, neither the receiving end 1 nor the receiving end 2 can transmit NACK/ACK when the use of the first type of resource is completed, then the receiving end 1 and the receiving end 2 transmit the NACK/ACK in the second type of resource.

When the second type of resource arrives, the station 1 transmits a signal (reference signal or signal occupying the channel) in the front portion of the second type of resource, and the transmission in the remaining portion stops. The receiving end 1 and the receiving end 2 transmit the NACK/ACK directly by using the remaining portion, and do not need to execute the CCA process. The front portion may be the first several OFDM symbols in the subframe, and the remaining portion may be other OFDM symbols in the subframe. The optional first several OFDM symbols are the first OFDM symbol. Thus, other stations will detect at the beginning of the second type of resource that when the unlicensed carrier is busy, and will no longer occupy the unlicensed carrier, thereby ensuring that the second type of resource is used by the receiving end for transmission.

The other stations receive the occupancy time length information transmitted by the station 1, and know the position of the second type of resource according to the appointment. When the second type of resource arrives, if the other stations want to use the second type of resource, the other stations need to execute first the CCA process in the first subframe of the second type of resource, and if a result of the CCA detection is idle, the remaining resource in the subframe and the other subframes in the second type of resource may be used; or if the CCA process is executed first in each subframe of the second type of resource, when a result of the detection is idle, the remaining resource in the corresponding subframe may be used by other stations.

If the other stations do not plan to use the second type of resource, the transmission of the data will be paused when the second type of resource arrives.

In the present embodiment, the second type of resource is selected to be n+4, to be compatible with timing of the LTE system. However, for the unlicensed carrier, control regulations exist in some regions or countries. To comply with the regulations, the second type of resource may be designed at n+2 or n+3, which is easier to meet requirements of the control regulations, but the requirements for processing speed of hardware are higher. Therefore, in the present embodiment, the second type of resource may be selected to be n+2 or n+3 according to the actual regions/countries.

### Embodiment five

On the basis of the embodiment 4, the station 1 may transmit the licensed information or the PHICH information in the front portion of the second type of resource. This approach is more suitable for the case where there are both the downlink and the uplink in the first type of resource.

Assuming that the distribution situation of the second type of resource determined by the system is as follows: the interval between the second type of resource and the last subframe of the first type of resource is 3 ms (i.e., if the last subframe of the first type of resource is n, then the first subframe of the second type of resource is n+4), and the second type of resource is composed of 1 subframe.

Assuming that the first type of resource of the station 1 is 10 subframes, denoted n-9, n-8, ... n-1 and n, respectively, and the first subframe of the second type of resource is n+4. Assuming that the station 1 transmits the data to a receiving end 1 in the n-1 subframe and the receiving end 1 does not receive it correctly; and the station 1 transmits the data to a receiving end 2 in the n-2 subframe, and the receiving end 2 receives it correctly. According to NACK/ACK feedback timing of the LTE, neither the receiving end 1 nor the receiving end 2 can transmit NACK/ACK when the use of the first type of resource is completed, then the receiving end 1 and the receiving end 2 transmit the NACK/ACK in the second type of resource. Assuming also that the station 1 receives correctly the data transmitted by the receiving end in the n subframe, and the station 1 does not transmit the corresponding PHICH when the use of the first type of resource is completed. At this point, the station 1 may transmit the PHICH in the second type of resource.

When the second type of resource arrives, the station 1 transmits PHICH (may also have other signals) in the front portion of the second type of resource, and the transmission in the remaining portion stops. The receiving end 1 and the receiving end 2 transmit the NACK/ACK directly by using the remaining portion, and do not need to execute the CCA process.

The other stations receive the occupancy time length information transmitted by the station 1 and know the position of the second type of resource according to the appointment. When the second type of resource arrives, if the other stations want to use the second type of resource, the other stations need to execute first the CCA process in the first subframe of the second type of resource, and if a result of the CCA detection is idle, the remaining resource in the subframe and the other subframes in the second type of resource may be used; or if the CCA process is executed first in each subframe of the second type of resource, when a result of the detection is idle, the remaining resource in the corresponding subframe may be used by other stations.

If the other stations do not plan to use the second type of resource, the transmission of the data will be paused when the second type of resource arrives.

In the present embodiment, the second type of resource is selected to be n+4, to be compatible with timing of the LTE system. However, for the unlicensed carrier, control regulations exist in some regions or countries. To comply with the regulations, the second type of resource can may designed at n+2 or n+3, which is easier to meet requirements of the control regulations, but the requirements for processing speed of hardware are higher. Therefore, in the present embodiment, the second type of resource may be selected to be n+2 or n+3 according to the actual regions/countries.

### Embodiment six

This embodiment describes release of the second type of resource.

After the station 1 obtains the right to use the first type of resource through the CCA while obtaining the preferential right to use the second type of resource, when the station 1 does not need to use the second type of resource, when the second type of resource arrives, the station 1 or the receiving end designated by the station 1 does not transmit any signal in the second type of resource. Thus, the other stations detect whether the second type of resource is idle first through the CCA detection when the second type of resource arrives, if it is found that the second type of resource is idle, then the other stations use the second type of resource. The station 1 may also notify other stations to release the second type of resource through transmitting of the signaling. Broadcast type signaling may be used.

### Embodiment seven

The station 1 can transmit measurement related signals by using the second type of resource. These signals may be used by the UE for related measurements. At this point, the interval between the second type of resource and the first type of resource is an optimal interval ,1ms or 2ms.

FIG. 6 is a structural block diagram of a device for managing a resource in an unlicensed carrier in accordance with an embodiment of the present invention. The device shown in FIG. 6 includes an acquisition module 601, a determination module 602 and a management module 603.

The acquisition module 601 is configured to acquire a right to use the unlicensed carrier.

The determination module 602 is configured to determine a use policy of a resource occupied by a station in the unlicensed carrier.

The management module 603 is configured to transmit and/or receive data by using the resource occupied by the station according to the use policy.

The use policy is that: the resource occupied by the device includes two types of resources, and the first type of resource is a resource used by the station, and the second type of resource is a resource which the station can use preferentially for transmitting and/or receiving data.

The management module 603 is configured to transmit the data by using the second type of resource if the station still needs to transmit the data after transmission by using the first type of resource is completed; and not use the second type of resource any more if the station does not need to transmit the data any more.

The acquisition module 601 is configured to acquire the right to use the unlicensed carrier by performing a clear channel assessment (CCA) detection.

The management module 603 is configured to,
not perform the CCA detection but use directly the second type of resource before using the second type of resource;
or, make preemption probability of the CCA detection performed before the use of the second type of resource higher than preemption probability of the CCA detection performed when the station acquires the first type of resource.

The management module 603 is configured to,
when the second type of resource is acquired, make a time length for which the station executes a CCA detection process shorter than a time length for which the station executes the CCA detection process used to preempting the first type of resource.

When the device does not perform the CCA detection but uses directly the second type of resource before using the second type of resource, a receiving end of the station and/or a station transmitting data to the station also does not perform the CCA detection but uses directly the second type of resource before using the second type of resource.

Stations other than the device, the receiving end of the device, and the station transmitting data to the device first perform the CCA detection at the second type of resource, and are allowed to use the second type of resource only when the unlicensed carrier is idle.

Relative positions of the first type of resource and the second type of resource are configured previously or configured by the device.

The second type of resource is discontinuous with the first type of resource in time. An interval between the second type of resource and the first type of resource is one or more of the following: 1 ms, 1.5 ms, 2 ms, 2.5 ms, 3 ms, 4 ms, 5 ms, 6 ms, 7 ms, 8 ms and 16 ms, herein the interval is a length of time between the end of the last subframe of the first type of resource and the start of the first subframe of the second type of resource.

A measurement unit of the second type of resource is 1 ms, or one subframe, or 0.5 ms, or is composed of 1 to 7 orthogonal frequency division multiplexing (OFDM) symbols for a standard cyclic prefix, or is composed of 1 to 6 OFDM symbols for a long cyclic prefix.

The second type of resource is discontinuous resources, herein measurement units of the discontinuous resources are the same or different.

The management module 603 is configured to,
transmit, by using the second type of resource, one or more of the following: physical hybrid auto repeat request indicator channel (PHICH) data, licensed information and reference signals; or
receive one or more of the following: a non-acknowledgment/acknowledgment (NACK/ACK) message and licensed information, which are transmitted by an appointed station in the second type of resource; or
receive data transmitted by the receiving end designated by the station in the second type of resource; or
simultaneously transmit and receive the data in the second type of resource in a time division multiplexing mode when using the second type of resource.

The management module 603 is configured to,
transmit information or data or signals to multiple destinations by using the second type of resource.

When the second type of resource includes a plurality of measurement units, the different measurement units support uplink and downlink; when only one measurement unit is included, the second type of resource includes a downlink resource and an uplink resource in the time division multiplexing mode.

The second type of resource further includes a guard interval for separating the uplink resource from the downlink resource.

The management module 603 is configured to,
transmit the data by using the second type of resource, and receive the data by using the second type of resource after completion of data transmission.

The management module 603 is configured to,
transmit a signal in a front resource of the second type of resource, and then receive information transmitted by the appointed receiving end in subsequent resource, herein the front resource and the subsequent resource are obtained by dividing according to the OFDM symbols in the second type of resource.

The front resource occupies first one to three or four OFDM symbols, and the subsequent resource occupies the remaining OFDM symbols, or there is an interval between the subsequent resource and the front resource.

In the embodiment of the invention, after the right to use the unlicensed carrier is acquired, the use policy of the unlicensed carrier is configured to facilitate future transmission of the information by using the resource, to achieve the object of transmitting the data by using the transmission resource effectively.

Those skilled in the art can understand that all or parts of steps of the above-mentioned embodiments can be implemented using computer program processes. The computer program can be stored in one computer readable storage medium. The computer program is executed on the corresponding hardware platform (e.g., system, equipment, apparatus, device, etc), and when the computer program is executed, one of steps of the method embodiments or the combination thereof is included.

In an exemplary embodiment, all or part of steps in the embodiments described above can be carried out using integrated circuits. These steps can be implemented by making integrated circuit modules one by one or by making a plurality of modules or steps thereof into a single integrated circuit module.

Various apparatuses/functional modules/functional units in the embodiments described above, which can be implemented by using general computing apparatuses, can be centralized on a single computing apparatus or distributed across a network formed from multiple computing apparatus.

Various apparatuses/functional modules/functional units in the embodiments described above, when implemented in a form of software functional module and sold or used as stand-stone products, can be stored in a computer readable storage medium. The computer readable storage medium mentioned above may be a read-only memory, a magnetic disk or an optical disk, etc.

### Industrial Applicability

In the embodiment of the invention, after the right to use the unlicensed carrier is acquired, the use policy of the unlicensed carrier is configured to facilitate future transmission of the information by using the resource, to achieve the effect of transmitting the data by using the transmission resource effectively.

## Claims

1. A method for managing a resource in an unlicensed carrier comprising:
acquiring, by a station, a right to use the unlicensed carrier (101);
determining, by the station, a use policy of a resource occupied by the station in the unlicensed carrier (102); and
transmitting and/or receiving, by the station, data by using the occupied resource according to the use policy (103), **characterized in that**, the use policy is that:
the resource occupied by the station comprises two types of resources, and a first type of resource is a resource used by the station, and a second type of resource is a resource which the station has a preferential right to use for transmitting and/or receiving data.

2. The method according to claim 1, further comprising:
configuring, by the station, the first type of resource before the second type of resource in a time order.

3. The method according to claim 1, wherein transmitting and/or receiving, by the station, data by using the occupied resource according to the use policy comprises:
after the station completes transmission by using the first type of resource, if the station still needs to transmit data, then using, by the station, the second type of resource for transmission; and if the station does not need to transmit data any more, not using, by the station, the second type of resource.

4. The method according to claim 1, wherein the station acquiring a right to use the unlicensed carrier comprises:
acquiring, by the station, the right to use the unlicensed carrier by performing a clear channel assessment, CCA, detection.

5. The method according to claim 1, wherein transmitting and/or receiving, by the station, data by using the occupied resource according to the use policy comprises:
directly using the second type of resource without performing a clear channel assessment, CCA detection by the station before using the second type of resource;
or, a preemption probability of the CCA detection performed by the station before using the second type of resource being higher than a preemption probability of a CCA detection performed by the station when acquiring a first type of resource,
wherein the preemption probability of the CCA detection performed by the station before using the second type of resource being higher than the preemption probability of a CCA detection performed by the station when preempting the first type of resource comprises:
a time length for which the station executes a CCA detection process when the station preempts the second type of resource being shorter than a time length for which the station executes a CCA detection process when the station preempts the first type of resource.

6. The method according to claim 5, further comprising:
when the station directly uses the second type of resource without performing the CCA detection before using the second type of resource, a receiving end of the station and/or a station transmitting data to the station also uses directly the second type of resource without performing the CCA detection before using the second type of resource;
wherein, a station other than the station that acquires the right to use the unlicensed carrier, the receiving end of the station, and a station transmitting data to the station first performs the CCA detection at the second type of resource, and is allowed to use the second type of resource only when the unlicensed carrier is idle.

7. The method according to claim 1, wherein relative positions of the first type of resource and the second type of resource are preconfigured or configured by the station;
or
wherein the second type of resource and the first type of resource are discontinuous in time;
or
wherein an interval between the second type of resource and the first type of resource is one or more of the following: 1 ms, 1.5 ms, 2 ms, 2.5 ms, 3 ms, 4 ms, 5 ms, 6 ms, 7 ms, 8 ms and 16 ms, wherein the interval is a length of time between an end of a last subframe of the first type of resource and a start of a first subframe of the second type of resource.

8. The method according to claim 1, wherein a measurement unit of the second type of resource is 1 ms, or one subframe, or 0.5 ms, or is composed of 1 to 7 orthogonal frequency division multiplexing, OFDM, symbols for a standard cyclic prefix, or is composed of 1 to 6 OFDM symbols for a long cyclic prefix;
or
wherein the second type of resource is discontinuous resources, wherein measurement units of the discontinuous resources are the same or different;
or
wherein when the second type of resource comprises a plurality of measurement units, uplink and downlink are supported in the different measurement units; when only one measurement unit is comprised, the second type of resource in a time division multiplexing mode comprises a downlink resource and an uplink resource;
or
wherein the second type of resource further comprises a guard interval for separating an uplink resource from a downlink resource.

9. The method according to claim 1, wherein the station transmitting and/or receiving data by using the occupied resource according to the use policy comprises:
the station transmitting, by using the second type of resource, one or more of the following: physical hybrid auto repeat request indicator channel, PHICH, data, licensed information and a reference signal; or
the station receiving, in the second type of resource, one or more of the following: a non-acknowledgment/acknowledgment, NACK/ACK, message and licensed information, which are transmitted by an appointed station; or
the station receiving data transmitted by a receiving end designated by the station in the second type of resource; or
the station simultaneously transmitting and receiving data in the second type of resource in a time division multiplexing mode when using the second type of resource.

10. The method according to claim 1, wherein the station transmitting and/or receiving data by using the occupied resource according to the use policy comprises:
transmitting, by the station, information or data or signals to a plurality of destinations by using the second type of resource.

11. The method according to claim 1, wherein transmitting and/or receiving, by the station, data by using the occupied resource according to the use policy comprises:
transmitting, by the station, data by using the second type of resource, and receiving data by using the second type of resource after completion of data transmission, and
wherein transmitting, by the station, data by using the second type of resource, and receiving data by using the second type of resource after completion of data transmission comprises:
transmitting, by the station, a signal in a front part of the second type of resource, and then receiving information transmitted by an appointed receiving end in a subsequent resource, wherein the front part of the second type of resource and the subsequent resource are obtained by dividing according to orthogonal frequency division multiplexing, OFDM, symbols in the second type of resource.

12. The method according to claim 11, wherein a front part of the second type of resource occupies first one to three or four OFDM symbols, and a subsequent resource occupies remaining OFDM symbols, or there is an interval between the subsequent resource and the front part of the second type of resource.

13. A station for managing a resource in an unlicensed carrier comprises:
an acquisition module (601) configured to acquire a right to use the unlicensed carrier;
a determination module configured to determine a use policy of a resource occupied by the station in the unlicensed carrier; and
a management module (603) configured to transmit and/or receive data by using the resource occupied by the station according to the use policy, **characterized in that**, the use policy is that:
the resource occupied by the station comprises two types of resources, and a first type of resource is a resource used by the station, and a second type of resource is a resource which the station has a preferential right to use for transmitting and/or receiving data.

14. A computer readable storage medium comprising instructions which, when executed by a computer, cause the computer to carry out the method according to any one of claims 1-12.

## Patentansprüche

1. Verfahren zum Verwalten einer Ressource in einem nicht lizenzierten Träger, das umfasst:
ein Erwerben eines Rechts zur Nutzung des nicht lizenzierten Trägers durch eine Station (101);
ein Bestimmen einer Nutzungsrichtlinie einer Ressource, die von der Station in dem nicht lizenzierten Träger (102) belegt wird, durch die Station; und
ein Senden und / oder ein Empfangen von Daten durch die Station unter Verwendung der belegten Ressource gemäß der Nutzungsrichtlinie (103), die **dadurch gekennzeichnet ist, dass** die Nutzungsrichtlinie ist, dass
die von der Station belegte Ressource zwei Arten an Ressourcen aufweist, und dass eine erste Art an Ressourcen eine von der Station verwendete Ressource ist, und dass eine zweite Art an Ressourcen eine Ressource ist, die die Station bevorzugt zum Senden und / oder zum Empfangen von Daten verwenden darf.

2. Verfahren nach Anspruch 1, das ferner umfasst:
ein Konfigurieren der ersten Art der Ressourcen durch die Station vor der zweiten Art der Ressourcen in einer zeitlichen Reihenfolge.

3. Verfahren nach Anspruch 1, wobei das Senden und / oder das Empfangen von Daten durch die Station unter Verwendung der belegten Ressource gemäß der Verwendungsrichtlinie umfasst,
dass wenn die Station nach Abschluss der Übertragung unter Verwendung der ersten Art der Ressourcen noch Daten übertragen muss, die Station die zweite Art der Ressourcen für die Übertragung durch die Station verwendet, und dass wenn die Station keine Daten mehr zu übertragen braucht, die Station die zweite Art der Ressourcen nicht verwendet.

4. Verfahren nach Anspruch 1, wobei das Erwerben des Rechts zur Nutzung des nicht lizenzierten Trägers umfasst:
ein Erwerben des Rechts zur Nutzung des nicht lizenzierten Trägers durch die Station durch ein Durchführen einer Erfassung mit Klarkanal-Bewertung, CCA-Erfassung.

5. Verfahren nach Anspruch 1, wobei das Senden und / oder das Empfangen von Daten durch die Station unter Verwendung der belegten Ressource gemäß der Verwendungsrichtlinie umfasst:
ein direktes Verwenden der zweiten Art der Ressourcen ohne ein Durchführen einer Erfassung mit Klarkanal-Bewertung, CCA-Erfassung, durch die Station vor dem Verwenden der zweiten Art der Ressourcen;
oder wenn eine Vorherbestimmungswahrscheinlichkeit der CCA-Erfassung, die von der Station durchgeführt worden ist, vor einem Verwenden der zweiten Art der Ressourcen höher als eine Vorherbestimmungswahrscheinlichkeit der CCA-Erfassung, die von der Station durchgeführt worden ist, bei dem Erwerben der ersten Art der Ressourcen ist;
wobei die Vorherbestimmungswahrscheinlichkeit der CCA-Erfassung, die von der Station durchgeführt worden ist, vor dem Verwenden der zweiten Art der Ressourcen höher als die Vorherbestimmungswahrscheinlichkeit der CCA-Erfassung ist, die von der Station durchgeführt worden ist, wenn der erste Ressourcentyp vorab bestimmt wird ist, umfasst:
eine Zeitdauer, für die die Station einen Prozess der CCA-Erfassung ausführt, wenn die Station die zweite Art der Ressourcen vorherbestimmt, kürzer als eine Zeitdauer ist, für die die Station einen Prozess der CCA-Erfassung ausführt, wenn die Station die erste Art der Ressourcen vorab bestimmt.

6. Verfahren nach Anspruch 5, welches ferner umfasst, dass
wenn die Station die zweite Art der Ressourcen direkt verwendet, ohne die CCA-Erfassung durchzuführen, bevor die zweite Art der Ressourcen verwendet wird, ein empfangendes Ende der Station und / oder eine Station, die Daten an die Station sendet, auch direkt die zweite Art der Ressourcen verwendet, ohne die CCA-Erfassung durchzuführen, bevor die zweite Art der Ressourcen verwendet wird;
wobei eine andere Station als die Station, die das Recht erwirbt, den nicht lizenzierten Träger, das empfangende Ende der Station und eine Station, die Daten an die Station sendet, zu verwenden, zuerst die CCA-Erfassung bei der zweiten Art der Ressourcen durchführt und die zweite Art der Ressourcen nur dann verwenden darf, wenn der nicht lizenzierte Träger inaktiv ist.

7. Verfahren nach Anspruch 1, wobei relative Positionen der ersten Art der Ressourcen und der zweiten Art der Ressourcen vorkonfiguriert worden sind oder von der Station konfiguriert werden; oder
wobei die zweite Art der Ressourcen und die erste Art der Ressourcen zeitlich diskontinuierlich sind; oder
wobei ein Intervall zwischen der zweiten Art der Ressourcen und der ersten Art der Ressourcen einer oder mehrere der folgenden ist: 1 ms, 1,5 ms, 2 ms, 2,5 ms, 3 ms, 4 ms, 5 ms, 6 ms, 7 ms, 8 ms und 16 ms, wobei das Intervall eine Zeitspanne zwischen dem Ende eines letzten Teilrahmens der ersten Art der Ressourcen und dem Beginn eines ersten Teilrahmens der zweiten Art der Ressourcen ist.

8. Verfahren nach Anspruch 1, wobei eine Maßeinheit der zweiten Art der Ressourcen 1 ms oder ein Teilrahmen oder 0,5 ms ist oder aus 1 bis 7 Symbolen eines orthogonalen Frequenzmultiplexens, OFDM-Symbolen, für ein zyklisches Standardpräfix gebildet wird; oder aus 1 bis 6 OFDM-Symbolen für ein langes zyklisches Präfix gebildet wird; oder
wobei die zweite Art der Ressourcen diskontinuierliche Ressourcen sind, wobei Maßeinheiten der diskontinuierlichen Ressourcen gleich oder verschieden sind; oder
wobei, wenn die zweite Art der Ressourcen mehrere Maßeinheiten aufweist, Aufwärtsverbindung und Abwärtsverbindung in den verschiedenen Maßeinheiten unterstützt werden; wobei, wenn nur eine Maßeinheit enthalten ist, die zweite Art der Ressourcen in einem Zeitmultiplexmodus eine Abwärtsverbindung-Ressource und eine Aufwärtsverbindung-Ressource aufweist; oder
wobei die zweite Art der Ressourcen ferner ein Schutzintervall zum Trennen der Aufwärtsverbindung-Ressource von der Abwärtsverbindung-Ressource aufweist.

9. Verfahren nach Anspruch 1, wobei die Station, die Daten unter Verwendung der belegten Ressource gemäß der Verwendungsrichtlinie sendet und / oder empfängt, umfasst, dass
die Station unter Verwendung der zweiten Art der Ressourcen eine oder mehrere der folgenden Eigenschaften überträgt: einen physischen Hybrid-Auto-Repeat-Anforderungsanzeigekanal, PHICH, Daten, lizenzierte Informationen und ein Referenzsignal; oder
dass die Station in der zweiten Art der Ressourcen eine oder mehrere der folgenden empfängt: eine Nachricht einer Nichtbestätigung/Bestätigung, NACK/ACK, und lizenzierte Informationen, die von einer bestimmten Station übertragen werden; oder
dass die Station Daten empfängt, die von einem Empfangsende gesendet werden, das von der Station in der zweiten Art der Ressourcen bezeichnet worden ist; oder
dass die Station, wenn die zweite Art der Ressourcen verwendet wird, Daten in der zweiten Art der Ressourcen in einem Zeitmultiplexmodus sendet und gleichzeitig empfängt

10. Verfahren nach Anspruch 1, wobei das Senden und / oder das Empfangen von Daten durch die Station unter Verwendung der belegten Ressource gemäß der Verwendungsrichtlinie umfasst:
ein Übertragen von Informationen oder von Daten oder von Signalen durch die Station an mehrere Ziele unter Verwendung der zweiten Art der Ressourcen.

11. Verfahren nach Anspruch 1, wobei das Senden und / oder das Empfangen von Daten durch die Station unter Verwendung der belegten Ressource gemäß der Verwendungsrichtlinie umfasst:
ein Senden von Daten durch die Station unter Verwendung der zweiten Art der Ressourcen und ein Empfangen von Daten unter Verwendung der zweiten Art der Ressourcen nach Abschluss der Datenübertragung, und
wobei das Senden von Daten durch die Station unter Verwendung der zweiten Art der Ressourcen und das Empfangen von Daten unter Verwendung der zweiten Art der Ressourcen nach Abschluss der Datenübertragung umfasst:
ein Senden eines Signals in einem vorderen Teil der zweiten Art der Ressourcen durch die Station und dann ein Empfangen von Informationen, die von einem bestimmten Empfangsende in einer nachfolgenden Ressource gesendet werden, wobei der vordere Teil der zweiten Art der Ressourcen und die nachfolgende Ressource durch ein orthogonales Frequenzmultiplexen, OFDM, von OFDM-Symbolen in der zweiten Art der Ressourcen erhalten werden.

12. Verfahren nach Anspruch 11, wobei ein vorderer Teil der zweiten Art der Ressourcen zuerst ein bis drei oder vier OFDM-Symbole belegt und eine nachfolgende Ressource verbleibende OFDM-Symbole belegt oder ein Intervall zwischen der nachfolgenden Ressource und dem vorderen Teil der zweiten Art der Ressourcen vorliegt.

13. Station zum Verwalten einer Ressource in einem nicht lizenzierten Träger, welche aufweist:
ein Erfassungsmodul (601), das ausgestaltet ist, um ein Recht zur Nutzung des nicht lizenzierten Trägers zu erwerben;
ein Bestimmungsmodul, das ausgestaltet ist, um eine Verwendungsrichtlinie einer Ressource zu bestimmen, die von der Station in dem nicht lizenzierten Träger belegt ist; und
ein Verwaltungsmodul (603), das ausgestaltet ist, um Daten unter Verwendung der von der Station belegten Ressource gemäß der Nutzungsrichtlinie zu senden und / oder zu empfangen, wobei die Nutzungsrichtlinie gekennzeichnet ist, dass
die von der Station belegte Ressource zwei Arten von Ressourcen aufweist, und dass eine erste Art der Ressourcen eine von der Station verwendete Ressource ist, und dass eine zweite Art von Ressourcen eine Ressource ist, die die Station bevorzugt zum Senden und / oder zum Empfangen der Daten verwenden darf.

14. Computerlesbares Speichermedium, welches Anweisungen enthält, die, wenn sie von einem Computer ausgeführt werden, den Computer veranlassen, das Verfahren gemäß einem der Ansprüche 1 bis 12 auszuführen

## Revendications

1. Procédé de gestion d'une ressource dans une porteuse sans licence comprenant :
l'acquisition par une station d'un droit d'utilisation de la porteuse sans licence (101) ;
la détermination par la station d'une politique d'utilisation d'une ressource occupée par la station dans la porteuse sans licence (102) ; et
l'émission et/ou la réception de données par la station en utilisant la ressource occupée selon la politique d'utilisation (103), **caractérisé en ce que** la politique d'utilisation est la suivante :
la ressource occupée par la station comprend deux types de ressource, et **en ce qu'**un premier type de ressource est une ressource utilisée par la station, et un deuxième type de ressource est une ressource pour laquelle la station a un droit préférentiel d'utilisation pour émettre et/ou recevoir des données.

2. Procédé selon la revendication 1, comprenant en outre :
la configuration par la station du premier type de ressource avant le deuxième type de ressource dans un ordre chronologique.

3. Procédé selon la revendication 1, dans lequel l'émission et/ou la réception de données par la station en utilisant la ressource occupée selon la politique d'utilisation comprend :
après l'achèvement de l'émission par la station en utilisant le premier type de ressource, l'utilisation, par la station, du deuxième type de ressource pour l'émission si la station doit encore émettre des données; et la non utilisation, par la station, du deuxième type de ressource si la station ne doit plus émettre des données.

4. Procédé selon la revendication 1, dans lequel l'acquisition d'un droit d'utilisation de la porteuse sans licence par la station comprend :
l'acquisition, par la station, du droit d'utilisation de la porteuse sans licence en réalisant une détection d'évaluation de canal libre, CCA.

5. Procédé selon la revendication 1, dans lequel l'émission et/ou la réception de données par la station en utilisant la ressource occupée selon la politique d'utilisation comprend :
l'utilisation directe du deuxième type de ressource sans réalisation d'une détection d'évaluation de canal libre, CCA, par la station avant l'utilisation du deuxième type de ressource ;
ou, une probabilité de préemption de la détection CCA réalisée par la station avant l'utilisation du deuxième type de ressource étant plus élevée qu'une probabilité de préemption d'une détection CCA réalisée par la station lors de l'acquisition d'un premier type de ressource,
dans lequel le fait d'avoir la probabilité de préemption de la détection CCA réalisée par la station avant l'utilisation du deuxième type de ressource plus élevée que la probabilité de préemption d'une détection CCA réalisée par la station lors de la préemption du premier type de ressource comprend :
une durée pendant laquelle la station exécute un procédé de détection CCA lorsque la station préempte le deuxième type de ressource plus courte qu'une durée pendant laquelle la station exécute un procédé de détection CCA lorsque la station préempte le premier type de ressource.

6. Procédé selon la revendication 5, comprenant en outre :
lorsque la station utilise directement le deuxième type de ressource sans réalisation de la détection CCA avant l'utilisation du deuxième type de ressource, une extrémité de réception de la station et/ou une station émettant des données vers la station utilisent également directement le deuxième type de ressource sans réalisation de la détection CCA avant l'utilisation du deuxième type de ressource ;
dans lequel une station autre que la station qui acquiert le droit d'utilisation de la porteuse sans licence, l'extrémité de réception de la station et une station émettant des données vers la station réalisent en premier la détection CCA au niveau du deuxième type de ressource et sont autorisées à utiliser le deuxième type de ressource uniquement lorsque la porteuse sans licence est libre.

7. Procédé selon la revendication 1, dans lequel les positions relatives du premier type de ressource et du deuxième type de ressource sont préconfigurées ou configurées par la station ;
ou
dans lequel le deuxième type de ressource et le premier type de ressource sont discontinus dans le temps ;
ou
dans lequel un intervalle entre le deuxième type de ressource et le premier type de ressource est un ou plusieurs des éléments suivants : 1 ms ; 1,5 ms ; 2 ms ; 2,5 ms ; 3 ms ; 4 ms ; 5 ms ; 6 ms ; 7 ms ; 8 ms et 16 ms, dans lequel l'intervalle est une durée entre une fin d'une dernière sous-trame du premier type de ressource et un début d'une première sous-trame du deuxième type de ressource.

8. Procédé selon la revendication 1, dans lequel une unité de mesure du deuxième type de ressource est 1 ms, ou une sous-trame, ou 0,5 ms, ou est composée de 1 à 7 symboles de multiplexage par répartition en fréquence orthogonale, OFDM, pour un préfixe cyclique standard ou est composée de 1 à 6 symboles OFDM pour un préfixe cyclique long ;
ou
dans lequel le deuxième type de ressource est constitué de ressources discontinues, dans lequel les unités de mesure des ressources discontinues sont les mêmes ou sont différentes ;
ou
dans lequel lorsque le deuxième type de ressource comprend une pluralité d'unités de mesure, la liaisons montante et la liaison descendante sont prises en charge dans les différentes unités de mesure ; lorsqu'une seule unité de mesure est comprise, le deuxième type de ressource dans un mode de multiplexage par répartition dans le temps comprend une ressource de liaison descendante et une ressource de liaison montante ;
ou
dans lequel le deuxième type de ressource comprend en outre un intervalle de garde pour séparer une ressource de liaison montante d'une ressource de liaison descendante.

9. Procédé selon la revendication 1, dans lequel l'émission et/ou la réception de données par la station en utilisant la ressource occupée selon la politique d'utilisation comprend :
l'émission par la station, en utilisant le deuxième type de ressource, d'un ou plusieurs des éléments suivants : des données de canal physique indicateur de demande de répétition automatique hybride, PHICH, des informations sous licence et un signal de référence ; ou
la réception par la station, dans un deuxième type de ressource, d'un ou plusieurs des éléments suivants : un message d'accusé de non réception/accusé de réception, NACK/ACK, et des informations sous licence, qui sont émis par une station désignée ; ou
la réception par la station de données émises par une extrémité de réception désignée par la station dans le deuxième type de ressource ; ou
l'émission et la réception simultanées, par la station, de données dans le deuxième type de ressource dans un mode de multiplexage par répartition dans le temps lors de l'utilisation du deuxième type de ressource.

10. Procédé selon la revendication 1, dans lequel l'émission et/ou la réception de données par la station en utilisant la ressource occupée selon la politique d'utilisation comprend :
l'émission par la station d'informations ou de données ou de signaux vers une pluralité de destinations en utilisant le deuxième type de ressource.

11. Procédé selon la revendication 1, dans lequel l'émission et/ou la réception de données par la station en utilisant la ressource occupée selon la politique d'utilisation comprend :
l'émission, par la station, de données en utilisant le deuxième type de ressource et la réception de données en utilisant le deuxième type de ressource après l'achèvement de l'émission des données, et
dans lequel l'émission, par la station, de données en utilisant le deuxième type de ressource et la réception de données en utilisant le deuxième type de ressource après l'achèvement de l'émission des données comprennent :
l'émission par la station d'un signal dans une partie avant du deuxième type de ressource puis la réception d'informations émises par une extrémité de réception désignée dans une ressource subséquente, dans lequel la partie avant du deuxième type de ressource et la ressource subséquente sont obtenues par division selon les symboles de multiplexage par répartition en fréquence orthogonale, OFDM, dans le deuxième type de ressource.

12. Procédé selon la revendication 11, dans lequel une partie avant du deuxième type de ressource occupe d'abord un à trois ou quatre symboles OFDM et une ressource subséquente occupe les symboles OFDM restants, ou il existe un intervalle entre la ressource subséquente et la partie avant du deuxième type de ressource.

13. Station pour la gestion d'une ressource dans une porteuse sans licence comprenant :
un module d'acquisition (601) configuré pour acquérir un droit d'utilisation de la porteuse sans licence ;
un module de détermination configuré pour déterminer une politique d'utilisation d'une ressource occupée par la station dans la porteuse sans licence ; et
un module de gestion (603) configuré pour émettre et/ou recevoir des données en utilisant la ressource occupée par la station selon la politique d'utilisation, **caractérisée en ce que** la politique d'utilisation est la suivante :
la ressource occupée par la station comprend deux types de ressource, et un premier type de ressource est une ressource utilisée par la station, et un deuxième type de ressource est une ressource pour laquelle la station a un droit préférentiel d'utilisation pour émettre et/ou recevoir des données.

14. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 12.
